# EUROPEAN PATENT SPECIFICATION

(11) **EP 3 904 070 B1**
(45) Date of publication and mention of the grant of the patent: **08.05.2024**
(21) Application number: 21165187.2
(22) Date of filing: 26.03.2021
(51) Int. Cl.: B32B 7/02, B32B 27/18, B32B 27/20, B32B 27/36, B29D 7/01, B29B 17/00, C08J 5/18, C08J 11/04, C08J 11/18, C08J 11/24

(54) **POLYESTER FILM HAVING LAMINATED STRUCTURE AND METHOD FOR MANUFACTURING THE SAME**
POLYESTERFOLIE MIT LAMINIERTER STRUKTUR UND VERFAHREN ZU IHRER HERSTELLUNG
FILM DE POLYESTER DOTÉ D'UNE STRUCTURE STRATIFIÉE ET SON PROCÉDÉ DE FABRICATION

(30) Priority: 28.04.2020 TW 109114102
(43) Date of publication of application: 03.11.2021
(73) Proprietor: NAN YA PLASTICS CORPORATION, Taipei (TW)
(72) Inventor: LIAO, Te-Chao, Taipei (TW); YANG, Wen-Cheng, Taipei (TW); YANG, Chun-Cheng, Taipei (TW); HSIAO, Chia-Yen, Taipei (TW); YUAN, Ching-Yao, Taipei (TW)
(74) Representative: Viering, Jentschura & Partner mbB Patent- und Rechtsanwälte

(56) References cited:
- EP-A1- 3 778 743
- WO-A1-00/77071
- JP-A- H11 302 443
- JP-A- 2011 256 328

## Description

### FIELD OF THE DISCLOSURE

The present disclosure relates to a polyester film having a laminated structure and a method for manufacturing the same, and more particularly to a polyester film having a laminated structure that uses both a physically recycled polyester resin and a chemically recycled polyester resin, and a method for manufacturing the same.

### BACKGROUND OF THE DISCLOSURE

JP 2011 256328 A discloses a polyester film having a laminated structure, wherein the film comprises at least two polyester film layers stacked upon each other, wherein each of the polyester film layers can be produced through recycling and reusing a recycled polyester material. One of the layers includes a mix of a physically recycled polyester resin, and a chemically recycled polyester resin. The general technical background of the invention also includes JP H11 302443 A, WO 00/77071 A1, US2003108730 and US2011192553.

In recent years, usage of plastics has increased significantly, and as a result, a large amount of plastic waste is produced. Since the plastics are not easily degraded, recycling of the plastics and how to process the plastics after recycling have become particularly important issues.

Polyethylene terephthalate (PET) makes up a major portion of recycled plastics, and recycled PET plastics takes up about 52.4% of a total amount of the recycled plastics. As such, the following description will be based on the recycled PET plastics. In order to deal with such a large amount of recycled PET plastics, researchers in the relevant field have to dedicate themselves to developing a method for processing the recycled PET plastics.

Out of the current techniques, the most common method to regenerate PET is through a physical (mechanical) manner. The recycled PET plastics that have been washed clean are firstly shredded to pieces and melted under high temperature, and then are extruded by an extruder to produce recycled PET chips (also called as r-PET).

To address environmental concerns and to ensure that PET products contain more eco-friendly recycled PET chips, a large amount of high-quality recycled PET chips is required. In the current industry, the PET recycling is mostly carried out by way of physical recycling. However, functional components (such as a slipping agent and an electrostatic pinning agent) are not allowed to be added, during a manufacturing process, to recycled chips that are produced through physical recycling. Therefore, it is necessary to use additional virgin (not regenerated) PET chips for additionally adding the above-mentioned functional components.

In this way, however, a usage rate of the recycled PET chips contained in the PET products will decrease. That is to say, in the current techniques, it is not possible to fully utilize the recycled PET chips to manufacture new PET products. If the usage rate of the recycled PET chips is too low, it may not be possible to satisfy a standard set up by environmental regulations such that an eco-label can be obtained. Moreover, as virgin PET chips that are newly used in the process of manufacturing the PET products would subsequently become the recycled PET plastics that require processing, a problem of recycling and reusing would still arise.

### SUMMARY OF THE DISCLOSURE

In response to the above-referenced technical inadequacies, the present disclosure provides a polyester film having a laminated structure and a method for manufacturing the same.

In one aspect, the present disclosure provides a method for manufacturing a polyester film. The polyester film thus obtained has a laminated structure, and at least two polyester film layers stacked upon each other are provided in the polyester film having the laminated structure. The method is characterized in that each of the polyester film layers is produced through recycling and reusing a recycled polyester material. Further, the method for manufacturing each of the polyester film layers includes: physically reproducing a part of the recycled polyester material and granulating the same to obtain a plurality of physically recycled polyester chips; chemically reproducing another part of the recycled polyester material and granulating the same to obtain a plurality of chemically recycled polyester chips; and mixing and melting the plurality of physically recycled polyester chips and the plurality of chemically recycled polyester chips to form the polyester film layer. The plurality of chemically recycled polyester chips further include chemically recycled electrostatic pinning polyester chips. The chemically recycled electrostatic pinning polyester chips contain at least one kind of electrostatic pinning additives, and the electrostatic pinning additives are metal salts. Based on 100 parts by weight of a total content of the polyester chips, a content of the chemically recycled electrostatic pinning polyester chips of the plurality of chemically recycled polyester chips is between 5 and 35 parts by weight. The at least two polyester film layers are a white polyester film layer and a black polyester film layer, respectively. The white polyester film layer further includes a white additive, and the black polyester film layer further includes a black additive

Preferably, the polyester film having the laminated structure is formed by coextruding the at least two polyester film layers.

Preferably, the polyester film having the laminated structure is formed by having one of the polyester film layers coated onto another one of the polyester film layers.

Preferably, in the white polyester film layer, the white additive is at least one selected from a material group consisting of titanium dioxide (TiO₂) particles, barium sulfate (BaSO₄) particles, and calcium carbonate (CaCO₃) particles. A particle size of the white additive is between 0.1 and 20 micrometers, and a content of the white additive in the white polyester film layer is between 0.05% and 35% by weight.

Preferably, in the black polyester film layer, the black additive is at least one selected from a material group consisting of carbon black powder, graphite powder, nano carbon black, carbon nanotubes, and graphene. A particle size of the black additive is between 0.01 and 10 micrometers, and a content of the black additive in the black polyester film layer is between 1% and 40% by weight.

In each of the polyester film layers, the plurality of physically recycled polyester chips form a physically recycled polyester resin, and the plurality of chemically recycled polyester chips form a chemically recycled polyester resin that is mixed with the physically recycled polyester resin. Based on 100 parts by weight of the total content of the polyester chips, a content of the plurality of physically recycled polyester chips prefereably between 50 and 95 parts by weight, a content of the plurality of chemically recycled polyester chips is between 1 and 40 parts by weight, and a total content of the plurality of physically recycled polyester chips and the plurality of chemically recycled polyester chips is between 55 and 100 parts by weight.

The step of chemically reproducing another part of the recycled polyester material further includes: depolymerizing the recycled polyester material to obtain a raw material mixture, and then repolymerizing and granulating the raw material mixture to obtain the plurality of chemically recycled polyester chips.

Preferably, the step of repolymerizing the raw material mixture further includes: adding the electrostatic pinning additives to a part of the raw material mixture, and then repolymerizing the raw material mixture that is added with the electrostatic pinning additives and granulating the same, thereby obtaining the chemically recycled electrostatic pinning polyester chips.

Preferably, in each of the polyester film layers, a content of the electrostatic pinning additives in the chemically recycled electrostatic pinning polyester chips is between 0.01% and 0.3% by weight, so that a content of the electrostatic pinning additives in the polyester film layer is between 0.005% and 0.1% by weight.

Preferably, the step of repolymerizing the raw material mixture further includes: adding a slipping agent to a part of the raw material mixture, and then repolymerizing the raw material mixture that is added with the slipping agent and granulating the same to obtain chemically recycled slipping polyester chips. The slipping agent is at least one selected from a material group consisting of silicon dioxide particles, calcium carbonate particles, barium sulfate particles, polystyrene particles, silica gel particles, and acrylic particles. Based on 100 parts by weight of the total content of the polyester chips, a content of the chemically recycled slipping polyester chips is between 5 and 10 parts by weight.

Preferably, in each of the polyester film layers, a particle size of the slipping agent is less than 2 micrometers. A content of the slipping agent in the chemically recycled slipping polyester chips is between 0.1% and 20% by weight, so that a content of the slipping agent in the polyester film layer is between 0.01% and 2% by weight.

Preferably, the plurality of physically recycled polyester chips and the plurality of chemically recycled polyester chips are both obtained through recycling, reusing, and granulation of the recycled polyester material. The recycled polyester material is recycled PET (r-PET) bottle chips.

Preferably, a polyester component of the recycled PET bottle chips includes isophthalic acid (IPA) serving as a dibasic acid unit, so that the polyester film that is finally formed also contains the isophthalic acid. Expressed in mole percent based on a total weight of the polyester film, a content of the isophthalic acid in the polyester film is between 0.5 mol% and 5 mol%.

Preferably, a polyester component of the recycled PET bottle chips includes biomass-derived ethylene glycol serving as a diol unit, so that the polyester film that is finally formed also contains the biomass-derived ethylene glycol. Expressed in percent by weight based on the total weight of the polyester film, a content of the biomass-derived ethylene glycol in the polyester film is between 1% and 25% by weight. A content of carbon derived from the biomass as measured by carbon dating (C14) is not greater than 5% based on a total carbon content of the polyester film.

In another aspect, the present disclosure provides a polyester film having a laminated structure. At least two polyester film layers stacked upon each other are provided in the polyester film having the laminated structure, and each of the polyester film layers is produced through recycling and reusing a recycled polyester material. Each of the polyester film layers includes a physically recycled polyester resin formed by a plurality of physically recycled polyester chips, and a chemically recycled polyester resin formed by a plurality of chemically recycled polyester chips and mixed with the physically recycled polyester resin. The plurality of chemically recycled polyester chips further include chemically recycled electrostatic pinning polyester chips. The chemically recycled electrostatic pinning polyester chips contain at least one kind of electrostatic pinning additives, and the electrostatic pinning additives are metal salts. Expressed in percent by weight based on a total weight of the polyester film, a content of the electrostatic pinning additives in the polyester film is between 0.005% and 0.1% by weight. The at least two polyester film layers are a white polyester film layer and a black polyester film layer, respectively. The white polyester film layer further includes a white additive, and the black polyester film layer further includes a black additive.

Preferably, in the white polyester film layer, the white additive is at least one selected from a material group consisting of titanium dioxide (TiO₂) particles, barium sulfate (BaSO₄) particles, and calcium carbonate (CaCO₃) particles. A particle size of the white additive is between 0.1 and 20 micrometers, and a content of the white additive in the white polyester film layer is between 0.05% and 35% by weight.

Preferably, in the black polyester film layer, the black additive is at least one selected from a material group consisting of carbon black powder, graphite powder, nano carbon black, carbon nanotubes, and graphene. A particle size of the black additive is between 0.01 and 10 micrometers, and a content of the black additive in the black polyester film layer is between 1% and 40% by weight.

Preferably, a quantity of film layers for the polyester film layers of the polyester film having the laminated structure is two, and the polyester film layers are stacked upon each other in a sequence of white and then black, or black and then white. Alternatively, a quantity of film layers for the polyester film layers of the polyester film having the laminated structure is three, and the polyester film layers are stacked upon each other in a sequence of white, black and then white, or black, white and then black.

One beneficial effect of the present disclosure is that, in the polyester film having the laminated structure and the method for manufacturing the same as provided, by virtue of "the plurality of chemically recycled polyester chips further including chemically recycled electrostatic pinning polyester chips, the chemically recycled electrostatic pinning polyester chips containing the electrostatic pinning additives, and the electrostatic pinning additives being metal salts" and "based on 100 parts by weight of the total content of the polyester chips, the content of the chemically recycled electrostatic pinning polyester chips of the plurality of chemically recycled polyester chips being between 5 and 35 parts by weight", the polyester film having the laminated structure can be manufactured by using a highly recycled polyester material, without needing to add additional virgin polyester chips or only needing to add a small amount thereof. In this way, a usage amount of the virgin polyester chips can be decreased significantly, and environmental concerns can be addressed.

Furthermore, in the polyester film having the laminated structure and the method for manufacturing the same as provided by the present disclosure, by virtue of "the at least two polyester film layers being a white polyester film layer and a black polyester film layer, respectively, the white polyester film layer further including a white additive, and the black polyester film layer further including a black additive", the polyester film having the laminated structure is capable of exhibiting effects of a black film layer and a white film layer at the same time, and can be applied to specific products (e.g., films for printing, packaging films, blocking films, curtains, light-shading films, adhesive tapes, and labels).

### BRIEF DESCRIPTION OF THE DRAWINGS

The present disclosure will become more fully understood from the following detailed description and accompanying drawings.

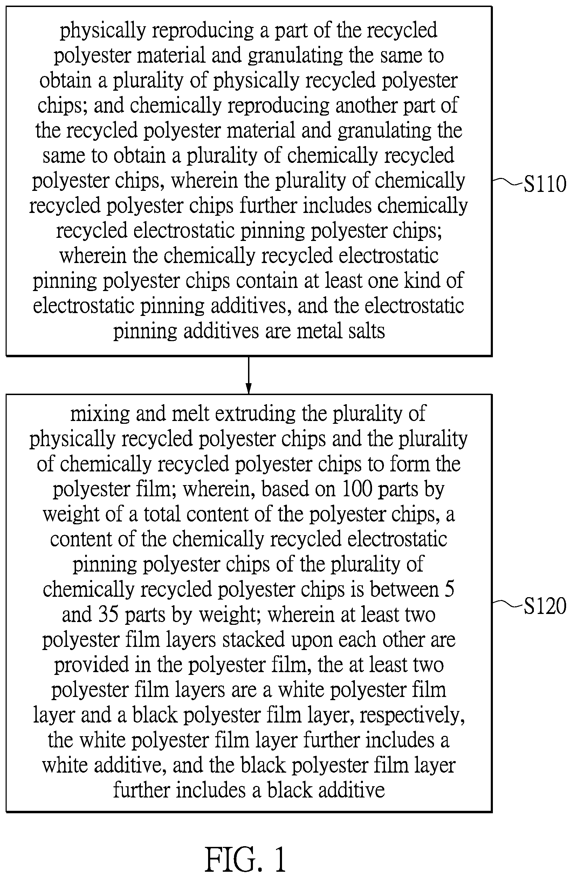

FIG. 1 is a flowchart describing a method for manufacturing a polyester film according to one embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

In order to process large amounts of recycled plastics, especially with respect to a recycled polyester material, an embodiment of the present disclosure provides a polyester film having a laminated structure that is produced by using the recycled polyester material, and a method for manufacturing the same. At least two polyester film layers stacked upon each other are provided in the polyester film having the laminated structure, and each of the polyester film layers is produced through recycling and reusing one recycled polyester material. Referring to FIG. 1, a flowchart briefly describing the method for manufacturing the polyester film (e.g., step S110 to step S120) is shown. A more detailed description will be provided below.

In each of the polyester film layers of the present embodiment, both a physically recycled polyester resin obtained through physical reproduction and a chemically recycled polyester resin obtained through chemical reproduction are used. In this way, a usage amount of the recycled polyester material in the polyester film is increased.

To be more specific, the polyester film of the present embodiment can be produced by using a highly recycled polyester material, without needing to add additional virgin polyester chips or only needing to add a small amount thereof.

### [Recycled Polyester Material]

Firstly, to obtain the recycled polyester material that is reusable, a recycling method for polyester resins includes: collecting discarded polyester resin materials of all types. The discarded polyester resin materials are then sorted by type, color, and intended purpose. Further, these discarded polyester resin materials are pressed and baled to be shipped to waste treatment facilities. In the present embodiment, the discarded polyester resin materials are recycled PET bottles. However, the present disclosure is not limited thereto.

Next, other parts (e.g., bottle tops, labels, and adhesives) of the discarded polyester resin materials would be removed. When such parts are removed from the discarded polyester resin materials, the discarded polyester resin materials are shredded, and then bottle rims, gaskets, and bottle bodies of different materials are separated from each other by flotation. The discarded polyester resin materials that are shredded are then dried. In this way, the recycled polyester material which has been processed, e.g. recycled PET (r-PET) bottle chips, can be obtained, and a subsequent process for manufacturing the polyester film may proceed.

It is worth mentioning that, in other embodiments of the present disclosure, the recycled polyester material can be, for example, a processed recycled polyester material directly obtained through purchase, so as to proceed with the subsequent process for manufacturing the polyester film.

According to the embodiment of the present disclosure, the method for manufacturing each of the polyester film layers includes: physically reproducing a part of the recycled polyester material (e.g. PET bottle chips) and granulating the same to obtain a plurality of physically recycled polyester chips, and chemically reproducing another part of the recycled polyester material and granulating the same to obtain a plurality of chemically recycled polyester chips.

It should be noted that, the terms "polyester", "polyester material", "polyester resin", etc. refer to any type of polyester, and especially to polyarylate. In particular, polyester derived from terephthalic acid and ethylene glycol, i.e., polyethylene terephthalate (PET), is referred to herein.

The polyester can also be, for example, poly trimethylene terephthalate, polybutylene terephthalate, or polyethylene naphthalate. The polyester in the present embodiment is preferably polyethylene terephthalate and poly trimethylene terephthalate. Moreover, a copolymer can also be used. The copolymer herein particularly refers to a copolymer derived from more than two types of dicarboxylic acid and/or more than two types of diol component.

### [Physical Reproduction]

A physical reproduction method includes: shredding the polyester material that is recycled (e.g., PET bottle chips), so as to decrease the time and energy consumption required for melting the recycled polyester material. Next, the recycled polyester material that has been shredded is melted and mixed, and then granulated via a single-screw extruder or a twin-screw extruder, so as to obtain the plurality of physically recycled polyester chips. That is to say, after undergoing the steps of shredding, melting and extruding in a sequential order, the recycled polyester material is reshaped, so that polyester molecules in the recycled polyester material are rearranged to thereby produce the plurality of physically recycled polyester chips.

Specifically, in the present embodiment, the plurality of physically recycled polyester chips can be further separated into physically recycled regular polyester chips and physically recycled slipping polyester chips.

The physically recycled regular polyester chips are physically recycled polyester chips that are not added with other additional additives (e.g., an electrostatic pinning additive, a slipping agent, and a coloring material) in the physical reproduction process.

Further, the physically recycled slipping polyester chips are physically recycled polyester chips that are further added with a slipping agent in the physical reproduction process (especially in the polyester melting process).

That is to say, the physically recycled slipping polyester chips contain a slipping agent, and the slipping agent is at least one selected from a material group consisting of silicon dioxide particles, calcium carbonate particles, barium sulfate particles, polystyrene particles, silica gel particles, and acrylic particles.

It should be noted that, in the present embodiment, the slipping agent can not only be added to the physically recycled polyester chips, but also be selectively added to chemically recycled polyester chips.

It is also worth mentioning that the polyester molecules have only been rearranged in the physical reproduction process, without being regrouped. Therefore, components originally present in the recycled polyester material (e.g., a metal catalyst, a slipping agent, an antioxidant, or an additive used in polyester synthesis) would still remain in a physically recycled polyester material, so that the polyester film that is finally formed would also contain such components. Meanwhile, properties that are inherent in polyester resins of PET bottles, such as having a lower concentration of cyclic oligomer, would also be kept in the physically recycled polyester chips.

### [Chemical Reproduction]

A chemical reproduction method includes: shredding the polyester material that is recycled (e.g., PET bottle chips), so as to decrease the time and energy consumption required for depolymerizing the recycled polyester material. Then, by immersion of the recycled polyester material that has been shredded in a chemical depolymerization solution, the polyester molecules of the recycled polyester material are subject to scission, thereby achieving depolymerization of the recycled polyester material. Further, a polyester composite with a shorter molecular chain and an ester monomer (e.g., BHET) formed by a combination of one dibasic acid unit and two diol units can be obtained.

In the present embodiment, the chemical depolymerization solution can be a solution of, for example, water, methyl alcohol, ethanol, ethylene glycol, diethylene glycol, or a combination thereof. However, the present disclosure is not limited thereto. For example, water is used for hydrolysis, and methyl alcohol, ethanol, ethylene glycol, or diethylene glycol is used for alcoholysis.

A raw material mixture is then filtered, so as to decrease concentration of non-polyester impurities in the raw material mixture. In addition, under specific reaction conditions, monomers and/or oligomers in the raw material mixture are repolymerized and granulated, so that the plurality of chemically recycled polyester chips can be obtained.

That is to say, different from physical reproduction, the chemical reproduction process involves "depolymerizing and repolymerizing the polyester molecules of the recycled polyester material", which allows the polyester molecules to be depolymerized into molecules of smaller molecular weight, and be repolymerized to form a new polyester resin.

In other embodiments of the present disclosure, a preparation method for the chemically recycled polyester chips is not limited by the description of the above-mentioned embodiment. The chemically recycled polyester chips can also be produced by a hydrolysis method or a supercritical fluid method. In the hydrolysis method, the recycled polyester material is processed in an alkaline solution. When being subject to a certain temperature, a certain pressure, and irradiation of microwave radiation, the polyester molecules are completely split into monomers. In the supercritical fluid method, the recycled polyester material is broken down into a small amount of monomers and oligomers in the methyl alcohol that is in a supercritical fluid state. A yield of the monomers and the oligomers would be affected by a reaction temperature and a reaction time.

More specifically, in the present embodiment, the plurality of chemically recycled polyester chips can be further separated into chemical regular polyester chips, chemical slipping polyester chips, and chemical electrostatic pinning polyester chips.

The chemical regular polyester chips are chemically recycled polyester chips that are not added with other additional additives (e.g., an electrostatic pinning additive, a slipping agent, and a coloring material) in the chemical reproduction process.

Moreover, a preparation method for the above-mentioned chemical slipping polyester chips and the chemical electrostatic pinning polyester chips can be, for example, adding other additives (e.g., a slipping agent, an electrostatic pinning additive, and the like) to the raw material mixture with monomers (which can be an ester monomer (e.g., BHET) formed by a reaction between two diol units and one dibasic acid unit) and/or oligomers in the repolymerization process of the polyester molecules. In this way, the additives would be uniformly mixed in the raw material mixture, to thereby alter properties of the chemically recycled polyester resin (e.g., slipperiness and electrostatic pinning property).

In the present embodiment, the step of repolymerizing the raw material mixture further includes: adding a slipping agent to a part of the raw material mixture to be uniformly mixed, and then repolymerizing the raw material mixture that is added with the slipping agent and granulating the same to obtain chemically recycled slipping polyester chips. The slipping agent is at least one selected from a material group consisting of silicon dioxide particles, calcium carbonate particles, barium sulfate particles, polystyrene particles, silica gel particles, and acrylic particles.

In addition, as mentioned above, the slipping agent can be selectively added in the physically recycled polyester chips and/or the chemically recycled polyester chips.

In the present embodiment, the step of repolymerizing the raw material mixture further includes: adding electrostatic pinning additives to a part of the raw material mixture, and then repolymerizing the raw material mixture that is added with the electrostatic pinning additives and granulating the same to obtain chemically recycled electrostatic pinning polyester chips.

It should be noted that, in the present description, the term "electrostatic pinning" refers to use of a material that increases electrical conductivity or decreases electrical resistance, and the term "electrostatic pinning additive" refers to the material that increases electrical conductivity or decreases electrical resistance.

According to the embodiment of the present disclosure, a preferred compound that is provided with an electrostatic pinning effect will be illustrated in the following description. However, the present disclosure is not limited thereto. Other known materials in the current technology, i.e., compounds or components that increase electrical conductivity of polyester or decrease electrical resistance thereof, can also be selected for use.

More specifically, the electrostatic pinning additives used in the present embodiment are metal salts. Preferably, the metal salts are metal salts that contain alkali metals or alkaline-earth metals, and contain aliphatic carboxylic acid.

In the metal salts that contain aliphatic carboxylic acid, a molecular structure of the aliphatic carboxylic acid contains 2 to 30 carbon atoms. For example, the aliphatic carboxylic acid (in the form of metal salts) contains monocarboxylic acid and dicarboxylic acid, and can be, for example, acetic acid, palmitic acid, stearic acid, oleic acid, or sebacic acid. In the present embodiment, the aliphatic carboxylic acid is preferably the acetic acid.

Furthermore, metal components of the metal salts can be, for example, alkali metals or alkaline-earth metals. In other words, the metal salts can be, for example, lithium salts, sodium salts, potassium salts, calcium salts, or magnesium salts.

In the present embodiment, the metal salts are preferably the magnesium salts or the lithium salts. The magnesium salts can be, for example, magnesium acetate (Mg(CH₃COO)₂), and the lithium salts can be, for example, lithium acetate (CH₃COOLi). However, the present disclosure is not limited thereto.

It is worth mentioning that, in current methods for manufacturing polyester films, a method that involves electrostatic pinning of a polyester melt is often employed to improve a production speed of the polyester film. In such a method, the polyester melt is required to have as low an electrical resistance value as possible to thereby achieve a high product quality. This can often be realized through adding the electrostatic pinning additives to the polyester melt.

In the current technology, however, the electrostatic pinning additives are often added in the virgin polyester chips. Therefore, although the recycled polyester material is used for manufacturing the polyester film, a large amount of the virgin polyester chips is still required to complete the manufacturing of the polyester film. As such, a usage rate of the recycled polyester material cannot be effectively enhanced.

Compared with the current technology, the method for manufacturing the polyester film of the present embodiment is to, in the repolymerization process of the polyester molecules, add the electrostatic pinning additives to the raw material mixture with monomers (e.g., BHET) and/or oligomers. In this way, the electrostatic pinning additives and the monomers and/or the oligomers are mixed uniformly. Then, the monomers and/or the oligomers in the raw material mixture would be repolymerized, so that the electrostatic pinning additives can be more uniformly mixed in the polyester resins.

Accordingly, by providing the chemically recycled electrostatic pinning polyester chips of the present embodiment, the adding of the electrostatic pinning additives to the virgin polyester chips can be replaced, so as to effectively decrease a usage amount of the virgin polyester chips and significantly increase the usage rate of the recycled polyester material.

It should be noted that, in order for the electrostatic pinning additives of the present embodiment to be uniformly mixed in polyester components, the chemical reproduction method must be employed.

In contrast, in the physical reproduction method, since the polyester molecules cannot be significantly degraded into monomers and/or oligomers, the electrostatic pinning additives cannot be uniformly mixed in the polyester resins. Thus, an intended effect of the electrostatic pinning additives (e.g., electrostatic pinning property) is prevented from being exerted.

That is to say, through adding the chemically recycled electrostatic pinning polyester chips of the present embodiment, electrical conductivity of the polyester resins can be effectively enhanced, which allows a polyester film to be produced at a high speed.

In a preparation process for the polyester film, when the chemically recycled electrostatic pinning polyester chips of the present embodiment are used, the speed of a first roller (injection molding roller/cooling roller) of a polyester film production equipment is significantly increased (for example, reaching a maximum value of 120m/min), while the polyester film can still be produced smoothly. At this speed, the polyester film can still remain closely adhered to a roller surface. In addition, at such a high speed, a thinner thin film can be produced. For example, a thin film that has a minimum thickness of 9 micrometers can be produced. In particular, the chemically recycled electrostatic pinning polyester chips of the present embodiment can effectively regulate the required electrical conductivity or electrical resistance value.

Accordingly, a number of chemically recycled polyester chips with different properties can be produced by virtue of the above-mentioned additives. Further, by virtue of the above-mentioned two different processes of physical reproduction and chemical reproduction, physically recycled polyester chips and chemically recycled polyester chips of different properties can be obtained. In this way, when a specific type of the chemically recycled polyester chips is selected, and a usage ratio is configured between the physically recycled polyester chips and the chemically recycled polyester chips, it can be advantageous for subsequent manufacturing of different polyester products (for example, a polyester film).

It is worth mentioning that, with respect to the method for manufacturing the polyester film of the present embodiment, cyclic oligomers may be generated in both the physical reproduction and chemical reproduction processes. Here, a concentration of the cyclic oligomers generated in the physical reproduction process is far less than a concentration of the cyclic oligomers generated in the chemical reproduction process.

It is also worth mentioning that, in one embodiment of the present disclosure, the step of chemically reproducing another part of the recycled polyester material further includes: using an ethylene glycol depolymerization solution to depolymerize the recycled polyester material, thereby obtaining the raw material mixture. Then, the plurality of physically recycled polyester chips are mixed with the plurality of chemically recycled polyester chips to decrease a concentration of diethylene glycol in the polyester film product. To be more specific, since a large amount of the ethylene glycol depolymerization solution is added to depolymerize the recycled polyester material, a composition ratio of diethylene glycol of the chemically recycled polyester resin as produced in a subsequent polymerization process would be relatively high. In addition, the diethylene glycol contains an ether group, which would decrease a heat resistance of the polyester material. Therefore, through mixing the plurality of physically recycled polyester chips with the plurality of chemically recycled polyester chips, an overall concentration of diethylene glycol in the polyester film is decreased in the present disclosure, thereby improving the above-mentioned problem of decreased heat resistance.

### [Preparation of Polyester Film]

The method for manufacturing the polyester film of the present embodiment is used to produce a polyester film having a laminated structure. At least two polyester film layers stacked upon each other are provided in the polyester film having the laminated structure.

The polyester film having the laminated structure can be, for example, formed by coextruding the at least two polyester film layers. Alternatively, the polyester film having the laminated structure can be, for example, formed by having one of the polyester film layers coated onto another one of the polyester film layers. However, the present disclosure is not limited thereto.

Each of the polyester film layers is produced through recycling and reusing one recycled polyester material, and can be obtained by the following method.

After the physical reproducing and chemical reproducing steps, each of the polyester film layers of the present embodiment is formed through mixing the plurality of physically recycled polyester chips with the plurality of chemically recycled polyester chips, and melt extruding the same.

In each of the polyester film layers, the plurality of physically recycled polyester chips form a physically recycled polyester resin, and the plurality of chemically recycled polyester chips form a chemically recycled polyester resin. The physically recycled polyester resin and the chemically recycled polyester resin are uniformly mixed with each other.

To enhance the usage rate of the recycled polyester material, each type of the recycled polyester chips as mentioned above has an appropriate content range.

More specifically, based on 100 parts by weight of a total content of the polyester chips, a content of the plurality of physically recycled polyester chips is preferably between 50 and 95 parts by weight, and is most preferably between 60 and 80 parts by weight. A content of the plurality of chemically recycled polyester chips is preferably between 1 and 40 parts by weight, and is most preferably between 20 and 30 parts by weight. Furthermore, a total content of the plurality of physically recycled polyester chips and the plurality of chemically recycled polyester chips is preferably between 55 and 100 parts by weight, and is most preferably between 70 and 100 parts by weight.

That is to say, expressed in percent by weight based on a total weight of the polyester film layer, a content of the physically recycled polyester resin is preferably between 50% and 95% by weight, and is most preferably between 60% and 80% by weight. A content of the chemically recycled polyester resin is preferably between 1% and 40% by weight, and is most preferably between 20% and 30% by weight. Furthermore, a total content of the physically recycled polyester resin and the chemically recycled polyester resin is preferably between 55% and 100% by weight, and is most preferably between 70% and 100% by weight.

It should be noted that, the term "percent by weight" can be abbreviated as "wt%" in the present description.

Based on the above configuration, a highly recycled polyester material can be used in the method for manufacturing the polyester film of the present embodiment, without needing to add additional virgin polyester chips or only needing to add a small amount thereof. For example, in one embodiment of the present disclosure, a content of the virgin polyester chips is generally not greater than 50 parts by weight, is preferably not greater than 30 parts by weight, and is most preferably not greater than 10 parts by weight.

To be specific, with respect to the slipping agent, based on 100 parts by weight of the total content of the polyester chips, a content of the physically recycled slipping polyester chips and/or the chemically recycled slipping polyester chips is between 5 and 10 parts by weight relative to the total content of the polyester chips.

Further, a particle size of the slipping agent is less than 2 micrometers. Of the physically recycled slipping polyester chips and/or the chemically recycled slipping polyester chips, a content of the slipping agent in the above-mentioned recycled slipping polyester chips is between 0.1% and 20% by weight, so that a content of the slipping agent in the polyester film layer is between 0.01% and 2% by weight.

In addition, with respect to the electrostatic pinning additives, based on 100 parts by weight of the total content of the polyester chips, a content of the chemically recycled electrostatic pinning polyester chips of the plurality of chemically recycled polyester chips is between 5 and 35 parts by weight.

A content of the electrostatic pinning additives in the chemically recycled electrostatic pinning polyester chips is between 0.01% and 0.3% by weight, so that a content of the electrostatic pinning additives in the polyester film layer is between 0.005% and 0.1% by weight.

It is worth mentioning that, in order for the polyester film to exhibit an effect of alternating black and white layers at the same time, the at least two polyester film layers of the present embodiment are a white polyester film layer and a black polyester film layer, respectively. The white polyester film layer further includes a white additive, and the black polyester film layer further includes a black additive.

### [White Polyester Film Layer]

A method for preparing the white polyester film layer includes: in at least one of the physical reproducing step and the chemical reproducing step, adding the white additive to the recycled polyester material, so that the white polyester film layer that is finally formed includes the white additive.

The white additive can be, for example, added by way of chemical reproduction. In addition, the step of repolymerizing the raw material mixture further includes: adding the white additive to a part of the raw mixture material, and then repolymerizing the raw material mixture that is added with the white additive and granulating the same, to thereby obtain chemically recycled white polyester chips.

The white additive can also be added, for example, by way of physical reproduction. More specifically, the step of physically reproducing a part of the recycled polyester material further includes: mechanically shredding and melting the recycled polyester material, and then adding the white additive to the melted recycled polyester material and granulating the same via the single-screw extruder or the twin-screw extruder, to thereby obtain physically recycled white polyester chips.

Accordingly, the white polyester film layer that is finally formed further includes the white additive, and the white additive is evenly dispersed in at least one of the physically recycled polyester resin and the chemically recycled polyester resin.

The white additive can be, for example, a white inorganic substance. The white inorganic substance can be, for example, at least one selected from a material group consisting of titanium dioxide (TiO₂) particles, barium sulfate (BaSO₄) particles, and calcium carbonate (CaCO₃) particles.

Moreover, a particle size of the white additive is between 0.1 and 20 micrometers, and a content of the white additive in the polyester film is between 0.05% and 35% by weight.

It is worth mentioning that the particle size of the white additive mentioned above is generally between 0.1 and 10 micrometers, is preferably between 0.1 and 5 micrometers, and is most preferably between 0.1 and 3 micrometers.

A content of the white additive in the white polyester film layer is generally between 0.05% and 35% by weight, is preferably between 10% and 30% by weight, and is most preferably between 12% and 25% by weight.

### [Black Polyester Film Layer]

A method for preparing the black polyester film layer includes: in the physical reproducing step, adding the black additive to the recycled polyester material, so that the black polyester film layer that is finally formed includes the black additive.

The black additive can also be added, for example, by way of physical reproduction. More specifically, the step of physically reproducing a part of the recycled polyester material further includes: mechanically shredding and melting the recycled polyester material, and then adding the black additive to the melted recycled polyester material and granulating the same via the single-screw extruder or the twin-screw extruder, to thereby obtain physically recycled black polyester chips.

Accordingly, the black polyester film layer that is finally formed further includes the black additive, and the black additive is evenly dispersed in the physically recycled polyester resin.

The black additive can be, for example, a black inorganic substance. The black inorganic substance can be, for example, at least one selected from a material group consisting of carbon black powder, graphite powder, nano carbon black, carbon nanotubes, and graphene.

Moreover, a particle size of the black additive is between 0.01 and 10 micrometers, and a content of the black additive in the polyester film is between 1% and 40% by weight.

It is worth mentioning that the particle size of the black additive mentioned above is generally between 0.01 and 10 micrometers, is preferably between 0.01 and 5 micrometers, and is most preferably between 0.01 and 2 micrometers.

A content of the black additive in the black polyester film layer is generally between 1% and 40% by weight, is preferably between 1% and 20% by weight, and is most preferably between 1% and 10% by weight.

It is also worth mentioning that in the chemical reproduction method, machine or equipment for use in the production process may be stained by the black additive, which gives rise to a problem of difficulty in washing the machine or equipment. Therefore, the black additive is not suitable for being added in the chemical reproducing step. That is to say, in the present embodiment, the black additive is included in the physically recycled polyester resin only, and not in the chemically recycled polyester resin. However, the present disclosure is not limited thereto.

Furthermore, a quantity of the polyester film layers of the polyester film can be, for example, two, and the polyester film layers are stacked upon each other in a sequence of white and then black or black and then white. A quantity of the polyester film layers of the polyester film can also be, for example, three, and the polyester film layers are stacked upon each other in a sequence of white, black and then white, or black, white and then black.

A thickness ratio of the above-mentioned black polyester film layer to the white polyester film layer can range, for example, from 1:20 to 20: 1. However, the present disclosure is not limited thereto.

Based on the above configuration, the polyester film of the present embodiment is capable of exhibiting effects of a black film layer and a white film layer at the same time, and can be applied to specific products (e.g., films for printing, packaging films, blocking films, curtains, light-shading films, adhesive tapes, and labels).

In addition, it is worth mentioning that the plurality of physically recycled polyester chips and the plurality of chemically recycled polyester chips as mentioned above are both obtained through recycling, reusing, and granulation of the recycled polyester material. The recycled polyester material is recycled PET (r-PET) bottle chips.

In one embodiment of the present disclosure, a polyester component of the recycled PET bottle chips includes isophthalic acid (IPA) serving as a dibasic acid unit, so that the polyester film that is finally formed also contains the isophthalic acid. Expressed in mole percent based on the total weight of the polyester film, a content of the isophthalic acid in the polyester film is between 0.5 mol% and 5 mol%.

In one embodiment of the present disclosure, a polyester component of the recycled PET bottle chips includes biomass-derived ethylene glycol serving as a diol unit, so that the polyester film that is finally formed also contains the biomass-derived ethylene glycol. Expressed in percent by weight based on the total weight of the polyester film, a content of the biomass-derived ethylene glycol in the polyester film is between 1% and 25% by weight. In addition, a content of carbon derived from the biomass as measured by carbon dating (C14) is not greater than 5% based on a total carbon content of the polyester film.

In one embodiment of the present disclosure, a polyester component of the recycled PET bottle chips includes a metal catalyst, so that the polyester film that is finally formed also contains the metal catalyst. The metal catalyst is at least one selected from a material group consisting of antimony (Sb), germanium (Ge), and titanium (Ti). Expressed in percent by weight based on the total weight of the polyester film, a content of the metal catalyst in the polyester film is between 0.0003% and 0.04% by weight.

### [Beneficial Effects of the Embodiments]

One beneficial effect of the present disclosure is that, in the polyester film having the laminated structure and the method for manufacturing the same as provided, by virtue of "the plurality of chemically recycled polyester chips further including chemically recycled electrostatic pinning polyester chips, the chemically recycled electrostatic pinning polyester chips containing at least one kind of electrostatic pinning additives, and the electrostatic pinning additives being metal salts" and "based on 100 parts by weight of the total content of the polyester chips, a content of the chemically recycled electrostatic pinning polyester chips of the plurality of chemically recycled polyester chips being between 5 and 35 parts by weight", the polyester film having the laminated structure can be manufactured by using a highly recycled polyester material, without needing to add additional virgin polyester chips or only needing to add a small amount thereof. In this way, a usage amount of the virgin polyester chips can be decreased significantly, and environmental concerns can be addressed.

Furthermore, in the polyester film having the laminated structure and the method for manufacturing the same as provided by the present disclosure, by virtue of "the at least two polyester film layers being a white polyester film layer and a black polyester film layer, respectively, the white polyester film layer further including a white additive, and the black polyester film layer further including a black additive", the polyester film having the laminated structure is capable of exhibiting effects of a black film layer and a white film layer at the same time, and can be applied to specific products (e.g., films for printing, packaging films, blocking films, curtains, light-shading films, adhesive tapes, and labels).

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated.

## Claims

1. A method for manufacturing a polyester film, wherein the polyester film thus obtained has a laminated structure, and at least two polyester film layers stacked upon each other are provided in the polyester film having the laminated structure; wherein the method is **characterized in that** each of the polyester film layers is produced through recycling and reusing a recycled polyester material, **characterized in that** the method for manufacturing each of the polyester film layers comprises:
physically reproducing a part of the recycled polyester material and granulating the same to obtain a plurality of physically recycled polyester chips;
chemically reproducing another part of the recycled polyester material and granulating the same to obtain a plurality of chemically recycled polyester chips, wherein the step of chemically reproducing another part of the recycled polyester material further includes: depolymerizing the recycled polyester material to obtain a raw material mixture, and then repolymerizing and granulating the raw material mixture to obtain the plurality of chemically recycled polyester chips, wherein the plurality of chemically recycled polyester chips further include chemically recycled electrostatic pinning polyester chips, and wherein the chemically recycled electrostatic pinning polyester chips contain at least one kind of electrostatic pinning additives, and the electrostatic pinning additives are metal salts; and
mixing and melting the plurality of physically recycled polyester chips and the plurality of chemically recycled polyester chips to form the polyester film layer;
wherein, based on 100 parts by weight of a total content of the polyester chips, a content of the chemically recycled electrostatic pinning polyester chips of the plurality of chemically recycled polyester chips is between 5 and 35 parts by weight;
wherein the at least two polyester film layers are a white polyester film layer and a black polyester film layer, respectively, and wherein the white polyester film layer further includes a white additive, and the black polyester film layer further includes a black additive.

2. The method according to claim 1, wherein the polyester film having the laminated structure is formed by coextruding the at least two polyester film layers.

3. The method according to claim 1, wherein the polyester film having the laminated structure is formed by having one of the polyester film layers coated onto another one of the polyester film layers.

4. The method according to claim 1, wherein in the white polyester film layer, the white additive is at least one selected from a material group consisting of titanium dioxide (TiO₂) particles, barium sulfate (BaSO₄) particles, and calcium carbonate (CaCO₃) particles; wherein a particle size of the white additive is between 0.1 and 20 micrometers, and a content of the white additive in the white polyester film layer is between 0.05% and 35% by weight.

5. The method according to claim 1, wherein in the black polyester film layer, the black additive is at least one selected from a material group consisting of carbon black powder, graphite powder, nano carbon black, carbon nanotubes, and graphene; wherein a particle size of the black additive is between 0.01 and 10 micrometers, and a content of the black additive in the black polyester film layer is between 1% and 40% by weight.

6. The method according to claim 1, wherein in each of the polyester film layers, the plurality of physically recycled polyester chips form a physically recycled polyester resin, and the plurality of chemically recycled polyester chips form a chemically recycled polyester resin that is mixed with the physically recycled polyester resin; wherein, based on 100 parts by weight of the total content of the polyester chips, a content of the plurality of physically recycled polyester chips is between 50 and 95 parts by weight, a content of the plurality of chemically recycled polyester chips is between 1 and 40 parts by weight, and a total content of the plurality of physically recycled polyester chips and the plurality of chemically recycled polyester chips is between 55 and 100 parts by weight.

7. The method according to claim 1, wherein the step of repolymerizing the raw material mixture further includes: adding the electrostatic pinning additives to a part of the raw material mixture, and then repolymerizing the raw material mixture that is added with the electrostatic pinning additives and granulating the same, thereby obtaining the chemically recycled electrostatic pinning polyester chips.

8. The method according to claim 7, wherein in each of the polyester film layers, a content of the electrostatic pinning additives in the chemically recycled electrostatic pinning polyester chips is between 0.01% and 0.3% by weight, so that a content of the electrostatic pinning additives in the polyester film layer is between 0.005% and 0.1% by weight.

9. The method according to claim 1, wherein the step of repolymerizing the raw material mixture further includes: adding a slipping agent to a part of the raw material mixture, and then repolymerizing the raw material mixture that is added with the slipping agent and granulating the same to obtain chemically recycled slipping polyester chips; wherein the slipping agent is at least one selected from a material group consisting of silicon dioxide particles, calcium carbonate particles, barium sulfate particles, polystyrene particles, silica gel particles, and acrylic particles; wherein, based on 100 parts by weight of the total content of the polyester chips, a content of the chemically recycled slipping polyester chips is between 5 and 10 parts by weight.

10. The method according to claim 9, wherein in each of the polyester film layers, a particle size of the slipping agent is less than 2 micrometers; wherein a content of the slipping agent in the chemically recycled slipping polyester chips is between 0.1% and 20% by weight, so that a content of the slipping agent in the polyester film layer is between 0.01% and 2% by weight.

11. The method according to claim 1, wherein the plurality of physically recycled polyester chips and the plurality of chemically recycled polyester chips are both obtained through recycling, reusing, and granulation of the recycled polyester material; wherein the recycled polyester material is recycled PET (r-PET) bottle chips.

12. The method according to claim 11, wherein a polyester component of the recycled PET bottle chips includes isophthalic acid (IPA) serving as a dibasic acid unit, so that the polyester film that is finally formed also contains the isophthalic acid; wherein, expressed in mole percent based on a total weight of the polyester film, a content of the isophthalic acid in the polyester film is between 0.5 mol% and 5 mol%.

13. The method according to claim 11, wherein a polyester component of the recycled PET bottle chips includes biomass-derived ethylene glycol serving as a diol unit, so that the polyester film that is finally formed also contains the biomass-derived ethylene glycol; wherein, expressed in percent by weight based on the total weight of the polyester film, a content of the biomass-derived ethylene glycol in the polyester film is between 1% and 25% by weight; wherein a content of carbon derived from the biomass as measured by carbon dating (C14) is not greater than 5% based on a total carbon content of the polyester film.

14. A polyester film having a laminated structure, **characterized in that** the polyester film comprises:
at least two polyester film layers stacked upon each other, wherein each of the polyester film layers is produced through recycling and reusing a recycled polyester material and includes:
a physically recycled polyester resin formed by a plurality of physically recycled polyester chips; and
a chemically recycled polyester resin formed by a plurality of chemically recycled polyester chips and mixed with the physically recycled polyester resin, wherein the plurality of chemically recycled polyester chips further include chemically recycled electrostatic pinning polyester chips, and wherein the chemically recycled electrostatic pinning polyester chips contain at least one kind of electrostatic pinning additives, and the electrostatic pinning additives are metal salts;
wherein, expressed in percent by weight based on a total weight of the polyester film layer, a content of the electrostatic pinning additives in the polyester film layer is between 0.005% and 0.1% by weight;
wherein the at least two polyester film layers are a white polyester film layer and a black polyester film layer, respectively, and wherein the white polyester film layer further includes a white additive, and the black polyester film layer further includes a black additive.

15. The polyester film according to claim 14, wherein in the white polyester film layer, the white additive is at least one selected from a material group consisting of titanium dioxide (TiO₂) particles, barium sulfate (BaSO₄) particles, and calcium carbonate (CaCO₃) particles; wherein a particle size of the white additive is between 0.1 and 20 micrometers, and a content of the white additive in the white polyester film layer is between 0.05% and 35% by weight.

16. The polyester film according to claim 14, wherein in the black polyester film layer, the black additive is at least one selected from a material group consisting of carbon black powder, graphite powder, nano carbon black, carbon nanotubes, and graphene; wherein a particle size of the black additive is between 0.01 and 10 micrometers, and a content of the black additive in the black polyester film layer is between 1% and 40% by weight.

17. The polyester film according to claim 14, wherein a quantity of film layers for the polyester film layers of the polyester film having the laminated structure is two, and the polyester film layers are stacked upon each other in a sequence of white and then black or black and then white; wherein, alternatively, a quantity of film layers for the polyester film layers of the polyester film having the laminated structure is three, and the polyester film layers are stacked upon each other in a sequence of white, black and then white, or black, white and then black.

## Patentansprüche

1. Verfahren zum Herstellen einer Polyesterfolie, wobei die Polyesterfolie, welche auf diese Weise erlangt wird, einen laminierten Aufbau hat, und wobei mindestens zwei Polyesterfolienschichten, welche übereinandergestapelt sind, in der Polyesterfolie bereitgestellt sind, welche den laminierten Aufbau hat; wobei das Verfahren **dadurch gekennzeichnet ist, dass** jede von den Polyesterfolienschichten mittels Recycelns und Wiederverwendens eines Recyceltes-Polyester-Materials hergestellt wird, **dadurch gekennzeichnet, dass** das Verfahren zum Herstellen von jeder von den Polyesterfolienschichten aufweist:
physikalisches Reproduzieren eines Teils des Recyceltes-Polyester-Materials und Granulieren des selbigen, um mehrere physikalisch recycelte Polyester-Chips zu erlangen;
chemisches Reproduzieren eines anderen Teils des Recyceltes-Polyester-Materials und Granulieren des selbigen, um mehrere chemisch recycelte Polyester-Chips zu erlangen, wobei der Schritt des chemischen Reproduzierens eines anderen Teils des Recyceltes-Polyester-Materials ferner aufweist: Depolymerisieren des Recyceltes-Polyester-Materials, um eine Rohmaterialmischung zu erlangen, und dann Repolymerisieren und Granulieren der Rohmaterialmischung, um die mehreren chemisch recycelten Polyester-Chips zu erlangen, wobei die mehreren chemisch recycelten Polyester-Chips ferner chemisch recycelte Elektrostatische-Haftung-Polyester-Chips aufweisen, und wobei die chemisch recycelten Elektrostatische-Haftung-Polyester-Chips mindestens eine Art von Elektrostatische-Haftung-Zusatzstoffen beinhalten, und wobei die Elektrostatische-Haftung-Zusatzstoffe Metallsalze sind; und
Mischen und Schmelzen der mehreren physikalisch recycelten Polyester-Chips und der mehreren chemisch recycelten Polyester-Chips, um die Polyesterfolienschicht zu bilden;
wobei, bezogen auf 100 Gewichtsanteile eines Gesamtgehalts der Polyester-Chips, ein Gehalt der chemisch recycelten Elektrostatische-Haftung-Polyesterchips von den mehreren chemisch recycelten Polyester-Chips zwischen 5 und 35 Gewichtsanteilen beträgt;
wobei die mindestens zwei Polyesterfolienschichten in jeweils zugeordneter Weise eine weiße Polyesterfolienschicht und eine schwarze Polyesterfolienschicht sind, und wobei die weiße Polyesterfolienschicht ferner einen weißen Zusatzstoff aufweist, und die schwarze Polyesterfolienschicht ferner einen schwarzen Zusatzstoff aufweist.

2. Verfahren gemäß Anspruch 1, wobei die Polyesterfolie, welche den laminierten Aufbau hat, mittels Koextrudierens der mindestens zwei Polyesterfolienschichten gebildet wird.

3. Verfahren gemäß Anspruch 1, wobei die Polyesterfolie, welche den laminierten Aufbau hat, gebildet wird, indem eine von den Polyesterfolienschichten auf eine andere von den Polyesterfolienschichten aufgebracht wird.

4. Verfahren gemäß Anspruch 1, wobei in der weißen Polyesterfolienschicht der weiße Zusatzstoff mindestens eines ist, welches aus einer Materialgruppe ausgewählt ist, welche aus Titandioxid(TiO₂)-Partikeln, Bariumsulfat(BaSO₄)-Partikeln und Kalziumkarbonat(CaCO₃)-Partikeln besteht; wobei eine Partikelgröße des weißen Zusatzstoffs zwischen 0,1 und 20 Mikrometern beträgt, und wobei ein Gehalt des weißen Zusatzstoffs in der weißen Polyesterfolienschicht zwischen 0,05 Gewicht-% und 35 Gewicht-% beträgt.

5. Verfahren gemäß Anspruch 1, wobei in der schwarzen Polyesterfolienschicht der schwarze Zusatzstoff mindestens eines ist, welches aus einer Materialgruppe ausgewählt ist, welche aus Industrieruß-Pulver, Graphit-Pulver, Nano-Industrieruß, Kohlenstoff-Nanoröhren und Graphen besteht; wobei eine Partikelgröße des schwarzen Zusatzstoffs zwischen 0,01 und 10 Mikrometern beträgt, und wobei ein Gehalt des schwarzen Zusatzstoffs in der schwarzen Polyesterfolienschicht zwischen 1 Gewicht-% und 40 Gewicht-% beträgt.

6. Verfahren gemäß Anspruch 1, wobei in jeder von den Polyesterfolienschichten die mehreren physikalisch recycelten Polyester-Chips ein physikalisch recyceltes Polyesterharz bilden, und die mehreren chemisch recycelten Polyester-Chips ein chemisch recyceltes Polyesterharz bilden, welches mit dem physikalisch recycelten Polyesterharz gemischt wird; wobei, bezogen auf 100 Gewichtsanteile des Gesamtgehalts der Polyester-Chips, ein Gehalt der mehreren physikalisch recycelten Polyester-Chips zwischen 50 und 95 Gewichtsanteilen beträgt, ein Gehalt der mehreren chemisch recycelten Polyester-Chips zwischen 1 und 40 Gewichtsanteilen beträgt, und ein Gesamtgehalt der mehreren physikalisch recycelten Polyester-Chips und der mehreren chemisch recycelten Polyester-Chips zwischen 55 und 100 Gewichtsanteilen beträgt.

7. Verfahren gemäß Anspruch 1, wobei der Schritt des Repolymerisierens der Rohmaterialmischung ferner folgendes aufweist: Hinzugeben der Elektrostatische-Haftung-Zusatzstoffe zu einem Teil der Rohmaterialmischung, und dann Repolymerisieren der Rohmaterialmischung, zu welcher die Elektrostatische-Haftung-Zusatzstoffe hinzugegeben wurden, und Granulieren der selbigen, wodurch die chemisch recycelten Elektrostatische-Haftung-Polyester-Chips erlangt werden.

8. Verfahren gemäß Anspruch 7, wobei in jeder von den Polyesterfolienschichten ein Gehalt der Elektrostatische-Haftung-Zusatzstoffe in den chemisch recycelten Elektrostatische-Haftung-Polyester-Chips zwischen 0,01 Gewicht-% und 0,3 Gewicht-% beträgt, so dass ein Gehalt der Elektrostatische-Haftung-Zusatzstoffe in der Polyesterfolienschicht zwischen 0,005 Gewicht-% und 0,1 Gewicht-% beträgt.

9. Verfahren gemäß Anspruch 1, wobei der Schritt des Repolymerisierens der Rohmaterialmischung ferner aufweist:
Hinzugeben eines Gleitmittels zu einem Teil der Rohmaterialmischung, und dann Repolymerisieren der Rohmaterialmischung, zu welcher das Gleitmittel hinzugegeben wurde, und Granulieren des selbigen, um chemisch recycelte Gleit-Polyester-Chips zu erlangen; wobei das Gleitmittel mindestens eines ist, welches aus einer Materialgruppe ausgewählt ist, welche aus Siliziumdioxid-Partikeln, Kalziumkarbonat-Partikeln, Bariumsulfat-Partikeln, Polystyrol-Partikeln, Silika-Gel-Partikeln und Acryl-Partikeln besteht;
wobei, bezogen auf 100 Gewichtsanteile des Gesamtgehalts der Polyester-Chips, ein Gehalt der chemisch recycelten Gleit-Polyester-Chips zwischen 5 und 10 Gewichtsanteilen beträgt.

10. Verfahren gemäß Anspruch 9, wobei in jeder von den Polyesterfolienschichten eine Partikelgröße des Gleitmittels weniger als 2 Mikrometer beträgt; wobei ein Gehalt des Gleitmittels in den chemisch recycelten Gleit-Polyester-Chips zwischen 0,1 Gewicht-% und 20 Gewicht-% beträgt, so dass ein Gehalt des Gleitmittels in der Polyesterfolienschicht zwischen 0,01 Gewicht-% und 2 Gewicht-% beträgt.

11. Verfahren gemäß Anspruch 1, wobei die mehreren physikalisch recycelten Polyester-Chips und die mehreren chemisch recycelten Polyester-Chips beide mittels Recycelns, Wiederverwendens und Granulation des Recyceltes-Polyester-Materials erlangt werden; wobei das Recyceltes-PolyesterMaterial Recycelte-PET(r-PET)-Flaschen-Chips sind.

12. Verfahren gemäß Anspruch 11, wobei eine Polyesterkomponente der Recycelte-PET-Flaschen-Chips Isophthalsäure (IPA) aufweist, welche als eine zweibasige Säureeinheit dient, so dass die Polyesterfolie, welche schließlich gebildet wird, auch die Isophthalsäure beinhaltet; wobei, ausgedrückt in Molprozent bezogen auf ein Gesamtgewicht der Polyesterfolie, ein Gehalt der Isophthalsäure in der Polyesterfolie zwischen 0,5 Mol-% und 5 Mol-% beträgt.

13. Verfahren gemäß Anspruch 11, wobei eine Polyesterkomponente der Recycelte-PET-Flasche-Chips aus Biomasse gewonnenes Ethylenglykol aufweist, welches als eine Diol-Einheit dient, so dass die Polyesterfolie, welche schließlich gebildet wird, auch das aus Biomasse gewonnene Ethylenglykol beinhaltet; wobei, ausgedrückt in Gewichtsprozent bezogen auf das Gesamtgewicht der Polyesterfolie, ein Gehalt des aus der Biomasse gewonnenen Ethylenglykols in der Polyesterfolie zwischen 1 Gewicht-% und 25 Gewicht-% beträgt; wobei ein Gehalt von aus der Biomasse gewonnenem Kohlenstoff, wie mittels Kohlenstoff-Datierens (C14) gemessen wird, nicht mehr als 5% beträgt, bezogen auf einen Gesamtkohlenstoffgehalt der Polyesterfolie.

14. Polyesterfolie, welche einen laminierten Aufbau hat, **dadurch gekennzeichnet, dass** die Polyesterfolie aufweist:
mindestens zwei Polyesterfolienschichten, welche übereinandergestapelt sind, wobei jede von den Polyesterfolienschichten mittels Recycelns und Wiederverwendens eines Recyceltes-Polyester-Materials hergestellt ist und aufweist:
ein physikalisch recyceltes Polyesterharz, welches mittels mehrerer physikalisch recycelter Polyester-Chips gebildet ist; und
ein chemisch recyceltes Polyesterharz, welches mittels mehrerer chemisch recycelter Polyester-Chips gebildet ist und mit dem physikalisch recycelten Polyesterharz gemischt ist, wobei die mehreren chemisch recycelten Polyester-Chips ferner chemisch recycelte Elektrostatische-Haftung-Polyester-Chips aufweisen, und wobei die chemisch recycelten Elektrostatische-Haftung-Polyester-Chips mindestens eine Art von Elektrostatische-Haftung-Zusatzstoffen beinhalten, und die Elektrostatische-Haftung-Zusatzstoffe Metallsalze sind;
wobei, ausgedrückt in Gewichtsprozent bezogen auf ein Gesamtgewicht der Polyesterfolienschicht, ein Gehalt der Elektrostatische-Haftung-Zusatzstoffe in der Polyesterfolienschicht zwischen 0,005 Gewicht-% und 0,1 Gewicht-% beträgt;
wobei die mindestens zwei Polyesterfolienschichten in jeweils zugeordneter Weise eine weiße Polyesterfolienschicht und eine schwarze Polyesterfolienschicht sind, und wobei die weiße Polyesterfolienschicht ferner einen weißen Zusatzstoff aufweist, und die schwarze Polyesterfolienschicht ferner einen schwarzen Zusatzstoff aufweist.

15. Polyesterfolie gemäß Anspruch 14, wobei in der weißen Polyesterfolienschicht der weiße Zusatzstoff mindestens eines ist, welches aus einer Materialgruppe ausgewählt ist, welche aus Titandioxid(TiO₂)-Partikeln, Bariumsulfat(BaSO₄)-Partikeln und Calciumcarbonat(CaCO₃)-Partikeln besteht; wobei eine Partikelgröße des weißen Zusatzstoffs zwischen 0,1 und 20 Mikrometern beträgt, und wobei ein Gehalt des weißen Zusatzstoffs in der weißen Polyesterfolienschicht zwischen 0,05 Gewicht-% und 35 Gewicht-% beträgt.

16. Polyesterfolie gemäß Anspruch 14, wobei in der schwarzen Polyesterfolienschicht der schwarze Zusatzstoff mindestens eines ist, welches aus einer Materialgruppe ausgewählt ist, welche aus Industrieruß-Pulver, Graphit-Pulver, Nano-Industrieruß, Kohlenstoff-Nanoröhren und Graphen besteht; wobei eine Partikelgröße des schwarzen Zusatzstoffs zwischen 0,01 und 10 Mikrometern beträgt, und wobei ein Gehalt des schwarzen Zusatzstoffs in der schwarzen Polyesterfolienschicht zwischen 1 Gewicht-% und 40 Gewicht-% beträgt.

17. Polyesterfolie gemäß Anspruch 14, wobei eine Anzahl von Folienschichten für die Polyesterfolienschichten der Polyesterfolie, welche den laminierten Aufbau hat, zwei beträgt, und die Polyesterfolienschichten in einer Abfolge von weiß und dann schwarz oder schwarz und dann weiß übereinandergestapelt sind; wobei alternativ eine Anzahl von Folienschichten für die Polyesterfolienschichten der Polyesterfolie, welche den laminierten Aufbau hat, drei beträgt, und die Polyesterfolienschichten in einer Abfolge von weiß, schwarz und dann weiß oder schwarz, weiß und dann schwarz übereinandergestapelt sind.

## Revendications

1. Procédé de fabrication d'un film de polyester, dans lequel le film de polyester ainsi obtenu présente une structure stratifiée, et au moins deux couches de film de polyester empilées l'une sur l'autre sont fournies dans le film de polyester présentant la structure stratifiée ; le procédé est **caractérisé en ce que** chacune des couches de film de polyester est produite par le recyclage et la réutilisation d'un matériau de polyester recyclé, **caractérisé en ce que** le procédé de fabrication de chacune des couches de film de polyester comprend :
reproduire physiquement une partie du matériau de polyester recyclé et la granuler pour obtenir une pluralité de copeaux de polyester physiquement recyclés ;
reproduire chimiquement une autre partie du matériau de polyester recyclé et la granuler pour obtenir une pluralité de copeaux de polyester chimiquement recyclés, l'étape de reproduction chimique d'une autre partie du matériau de polyester recyclé comprenant en outre : dépolymériser le matériau de polyester recyclé pour obtenir un mélange de matières premières, puis repolymériser et granuler le mélange de matières premières pour obtenir la pluralité de copeaux de polyester chimiquement recyclés, la pluralité de copeaux de polyester chimiquement recyclés comprenant en outre des copeaux de polyester à adhérence électrostatique chimiquement recyclés, et les copeaux de polyester à adhérence électrostatique chimiquement recyclés contenant au moins un type d'additifs d'adhérence électrostatique, et les additifs d'adhérence électrostatique étant des sels métalliques ; et
mélanger et fondre la pluralité de copeaux de polyester physiquement recyclés et la pluralité de copeaux de polyester chimiquement recyclés pour former la couche de film de polyester ;
dans lequel, sur la base de 100 parties en poids d'un contenu total des copeaux de polyester, un contenu des copeaux de polyester à adhérence électrostatique chimiquement recyclés de la pluralité de copeaux de polyester chimiquement recyclés est compris entre 5 et 35 parties en poids ;
dans lequel les au moins deux couches de film de polyester sont respectivement une couche de film de polyester blanche et une couche de film de polyester noire, et dans lequel la couche de film de polyester blanche comprend en outre un additif blanc, et la couche de film de polyester noire comprend en outre un additif noir.

2. Procédé selon la revendication 1, dans lequel le film de polyester présentant la structure stratifiée est formé par coextrusion des au moins deux couches de film de polyester.

3. Procédé selon la revendication 1, dans lequel le film de polyester présentant la structure stratifiée est formé par le revêtement d'une des couches de film de polyester sur une autre des couches de film de polyester.

4. Procédé selon la revendication 1, dans lequel, dans la couche de film de polyester blanche, l'additif blanc est au moins un choisi dans un groupe de matériaux constitué par des particules de dioxyde de titane (TiO₂), des particules de sulfate de baryum (BaSO₄) et des particules de carbonate de calcium (CaCO₃) ; dans lequel une taille de particule de l'additif blanc est comprise entre 0,1 et 20 micromètres, et une teneur en l'additif blanc dans la couche de film de polyester blanche est comprise entre 0,05 % et 35 % en poids.

5. Procédé selon la revendication 1, dans lequel, dans la couche de film de polyester noire, l'additif noir est au moins un choisi dans un groupe de matériaux constitué par la poudre de noir de carbone, la poudre de graphite, le nano noir de carbone, des nanotubes de carbone et le graphène ; dans lequel une taille de particule de l'additif noir est comprise entre 0,01 et 10 micromètres, et une teneur en l'additif noir dans la couche de film de polyester noire est comprise entre 1 % et 40 % en poids.

6. Procédé selon la revendication 1, dans lequel, dans chacune des couches de film de polyester, la pluralité de copeaux de polyester physiquement recyclés forment une résine de polyester physiquement recyclée, et la pluralité de copeaux de polyester chimiquement recyclés forment une résine de polyester chimiquement recyclée qui est mélangée à la résine de polyester physiquement recyclée ; dans lequel, sur la base de 100 parties en poids du contenu total des copeaux de polyester, un contenu de la pluralité de copeaux de polyester physiquement recyclés est compris entre 50 et 95 parties en poids, un contenu de la pluralité de copeaux de polyester chimiquement recyclés est compris entre 1 et 40 parties en poids, et un contenu total de la pluralité de copeaux de polyester physiquement recyclés et de la pluralité de copeaux de polyester chimiquement recyclés est compris entre 55 et 100 parties en poids.

7. Procédé selon la revendication 1, dans lequel l'étape de repolymérisation du mélange de matières premières comprend en outre : ajouter les additifs d'adhérence électrostatique à une partie du mélange de matières premières, puis repolymériser le mélange de matières premières qui est ajouté avec les additifs d'adhérence électrostatique et granuler celui-ci, obtenant ainsi les copeaux de polyester à adhérence électrostatique chimiquement recyclés.

8. Procédé selon la revendication 7, dans lequel, dans chacune des couches de film de polyester, une teneur en additifs d'adhérence électrostatique dans les copeaux de polyester à adhérence électrostatique chimiquement recyclés est comprise entre 0,01 % et 0,3 % en poids, de sorte qu'une teneur en additifs d'adhérence électrostatique dans la couche de film de polyester est comprise entre 0,005 % et 0,1 % en poids.

9. Procédé selon la revendication 1, dans lequel l'étape de repolymérisation du mélange de matières premières comprend en outre : ajouter un agent de glissement à une partie du mélange de matières premières, puis repolymériser le mélange de matières premières additionné de l'agent de glissement et granuler ce dernier pour obtenir des copeaux de polyester de glissement chimiquement recyclés ; dans lequel l'agent de glissement est au moins un choisi dans un groupe de matériaux constitué par des particules de dioxyde de silicium, des particules de carbonate de calcium, des particules de sulfate de baryum, des particules de polystyrène, des particules de gel de silice et des particules acryliques ; dans lequel, sur la base de 100 parties en poids du contenu total des copeaux de polyester, un contenu des copeaux de polyester de glissement chimiquement recyclés est compris entre 5 et 10 parties en poids.

10. Procédé selon la revendication 9, dans lequel, dans chacune des couches de film de polyester, une taille de particule de l'agent de glissement est inférieure à 2 micromètres ; dans lequel une teneur en agent de glissement dans les copeaux de polyester de glissement chimiquement recyclés est comprise entre 0,1 % et 20 % en poids, de sorte qu'une teneur en agent de glissement dans la couche de film de polyester est comprise entre 0,01 % et 2 % en poids.

11. Procédé selon la revendication 1, dans lequel la pluralité de copeaux de polyester physiquement recyclés et la pluralité de copeaux de polyester chimiquement recyclés sont toutes les deux obtenues par recyclage, réutilisation et granulation du matériau de polyester recyclé ; dans lequel le matériau de polyester recyclé est constitué de copeaux de bouteilles de PET recyclées (r-PET).

12. Procédé selon la revendication 11, dans lequel un composant de polyester des copeaux de bouteilles de PET recyclées comprend de l'acide isophtalique (IPA) servant d'unité d'acide dibasique, de sorte que le film de polyester finalement formé contient également l'acide isophtalique ; dans lequel, exprimée en pourcentage molaire sur la base d'un poids total du film de polyester, une teneur en acide isophtalique dans le film de polyester est comprise entre 0,5 % molaire et 5 % molaire.

13. Procédé selon la revendication 11, dans lequel un composant de polyester des copeaux de bouteilles de PET recyclées comprend de l'éthylène glycol dérivé de la biomasse servant d'unité diol, de sorte que le film de polyester qui est finalement formé contient également l'éthylène glycol dérivé de la biomasse ; dans lequel, exprimée en pourcentage en poids sur la base du poids total du film de polyester, une teneur en éthylène glycol dérivé de la biomasse dans le film de polyester est comprise entre 1 % et 25 % en poids ; dans lequel une teneur en carbone dérivé de la biomasse, mesurée par datation au carbone (C14), n'est pas supérieure à 5 % sur la base d'une teneur totale en carbone du film de polyester.

14. Film de polyester présentant une structure stratifiée, **caractérisé en ce que** le film de polyester comprend :
au moins deux couches de film de polyester empilées l'une sur l'autre, chacune des couches de film de polyester étant produite par le recyclage et la réutilisation d'un matériau de polyester recyclé et comprenant :
une résine de polyester physiquement recyclée formée par une pluralité de copeaux de polyester physiquement recyclés ; et
une résine de polyester chimiquement recyclée formée par une pluralité de copeaux de polyester chimiquement recyclés et mélangée à la résine de polyester physiquement recyclée, la pluralité de copeaux de polyester chimiquement recyclés comprenant en outre des copeaux de polyester à adhérence électrostatique chimiquement recyclés, et les copeaux de polyester à adhérence électrostatique chimiquement recyclés contenant au moins un type d'additifs d'adhérence électrostatique, et les additifs d'adhérence électrostatique étant des sels de métal ;
dans lequel, exprimée en pourcentage en poids sur la base d'un poids total de la couche de film de polyester, une teneur en additifs d'adhérence électrostatique dans la couche de film de polyester est comprise entre 0,005 % et 0,1 % en poids ;
dans lequel les au moins deux couches de film de polyester sont respectivement une couche de film de polyester blanche et une couche de film de polyester noire, et dans lequel la couche de film de polyester blanche comprend en outre un additif blanc, et la couche de film de polyester noire comprend en outre un additif noir.

15. Film de polyester selon la revendication 14, dans lequel dans la couche de film de polyester blanche, l'additif blanc est au moins un choisi dans un groupe de matériaux constitué par des particules de dioxyde de titane (TiO₂), des particules de sulfate de baryum (BaSCt), et des particules de carbonate de calcium (CaCO₃) ; dans lequel une taille de particule de l'additif blanc est comprise entre 0,1 et 20 micromètres, et une teneur en additif blanc dans la couche de film de polyester blanche est comprise entre 0,05 % et 35 % en poids.

16. Film de polyester selon la revendication 14, dans lequel dans la couche de film de polyester noire, l'additif noir est au moins un choisi dans un groupe de matériaux constitué par la poudre de noir de carbone, la poudre de graphite, le nano noir de carbone, des nanotubes de carbone et le graphène ; dans lequel une taille de particule de l'additif noir est comprise entre 0,01 et 10 micromètres, et une teneur en l'additif noir dans la couche de film de polyester noire est comprise entre 1 % et 40 % en poids.

17. Film de polyester selon la revendication 14, dans lequel une quantité de couches de film pour les couches de film de polyester du film de polyester présentant la structure stratifiée est de deux, et les couches de film de polyester sont empilées les unes sur les autres dans une séquence de blanc puis de noir ou de noir puis de blanc ; dans lequel, en alternative, une quantité de couches de film pour les couches de film de polyester du film de polyester présentant la structure stratifiée est de trois, et les couches de film de polyester sont empilées les unes sur les autres dans une séquence de blanc, de noir puis de blanc, ou de noir, de blanc puis de noir.
